# EUROPÄISCHE PATENTSCHRIFT

(11) **EP 3 645 905 B1**
(45) Veröffentlichungstag und Bekanntmachung des Hinweises auf die Patenterteilung: **24.08.2022**
(21) Anmeldenummer: 18743673.8
(22) Anmeldetag: 27.06.2018
(51) Int. Cl.: F16D 21/06

(54) **KUPPLUNGSANORDNUNG**
CLUTCH ASSEMBLY
DISPOSITIF D'ACCOUPLEMENT

(30) Priorität: 29.06.2017 DE 102017114439
(43) Veröffentlichungstag der Anmeldung: 06.05.2020
(73) Patentinhaber: Schaeffler Technologies AG & Co. KG, 91074 Herzogenaurach (DE)
(72) Erfinder: LARBIG, Julian, 37296 Ringgau (DE); NÖHL, Oliver, 77830 Bühlertal (DE)
(86) Internationale Anmeldenummer: PCT/DE2018/100589
(87) Internationale Veröffentlichungsnummer: WO 2019/001638

(56) Entgegenhaltungen:
- WO-A1-2011/124203
- DE-A1-102007 019 495
- DE-A1-102013 214 215
- DE-A1-102016 217 211

## Beschreibung

Die Erfindung betrifft eine Kupplungsanordnung gemäß dem Oberbegriff des Patentanspruchs 1. Insbesondere betrifft die Erfindung eine Kupplungsanordnung, umfassend wenigstens eine Kupplungseinrichtung sowie eine dieser nachgeschaltete Einrückeinrichtung zum Betätigen der Kupplungseinrichtung, wobei die Kupplungseinrichtung mit einem Bauteil über ein Lager an einem positionsfesten Anordnungsbauteil radial zentriert ist.

Eine solche Kupplungsanordnung dient bekanntlich dazu, eine drehmomentübertragende Verbindung zwischen einem Antriebsglied, beispielsweise einer Brennkraftmaschine, und einem Abtriebsglied, beispielsweise einem Getriebe herzustellen. Hierzu ist wenigstens eine Kupplungseinrichtung vorgesehen, die zumeist als Lamellenkupplung ausgeführt ist. Diese umfasst einen Außenlamellenträger, an dem axial bewegliche Außenlamellen angeordnet sind, sowie einen Innenlamellenträger, an dem ebenfalls axial beweglich Innenlamellen, die zwischen die Außenlamellen greifen, angeordnet sind. Der Außenlamellenträger ist beispielsweise mit dem Antriebsglied verbunden, während der Innenlamellenträger mit dem Abtriegsglied beispielsweise über eine Hohlwelle gekoppelt ist.

Zum Zusammendrücken der Kupplungseinrichtung, um diese also ein Drehmoment übertragend zu schließen, dient eine Einrückeinrichtung, die zumeist hydraulisch betätigt wird. Das Hydraulikfluid wird der Hydraulikeinrichtung zugeführt, über das Hydraulikfluid wird ein Ringkolben axial bewegt, der wiederum mit einem mit der Lamellenkupplungseinrichtung gekoppelten Betätigungselement wie beispielsweise einem Drucktopf gekoppelt ist, der hierüber axial bewegt werden und das Lamellenpaket zusammendrücken kann.

Neben einer solchen Einfachkupplung ist es auch bekannt, eine Kupplungsanordnung in Form einer Doppelkupplung auszuführen. In diesem Fall sind beispielsweise zwei solcher Kupplungseinrichtungen, z. B. radial ineinander angeordnet, vorgesehen, die über eine gemeinsame Einrückeinrichtung, jedoch separat über jeweilig separate Betätigungselemente, beispielsweise Drucktöpfe, betätigt werden können, das heißt, dass entweder der eine Drucktopf zum Betätigen der einen Kupplungseinrichtung oder der andere Drucktopf zum Betätigen der anderen Kupplungseinrichtung betätigt werden kann. Jeder Innenlamellenträger der Kupplungseinrichtungen ist mit einem separaten Abtriebsglied, also einer separaten Hohlwelle oder dergleichen verbunden, so dass je nach betätigter Kupplungseinrichtung ein individueller Getriebeteil angekoppelt werden kann.

Der Aufbau einer solchen Einfach- oder Doppelkupplung ist hinlänglich bekannt. Verwiesen wird exemplarisch auf DE 10 2016 217211 A1, DE 10 2010 051 447 A1 oder DE 10 2010 052 384 A1

Als weiterer Stand der Technik wird auf die DE 10 2013 214 215 A1 sowie auf die WO 2011/124203 A1 und auf die DE 10 2016 019 495 A1 verwiesen, die auf den Oberbegriff des Patentanspruchs 1 lesbar sind.

Bei bekannten Kupplungsanordnungen ist die Einrückeinrichtung, die eine ringförmige Baugruppe ist, da eine oder mehrere Ringkolbeneinheiten vorgesehen sind und sie von der oder den abtreibenden Hohlwellen durchsetzt ist, fest, beispielsweise über Schraubverbindungen, mit dem Getriebegehäuse bzw. dem Getriebeboden, der beispielsweise eine entsprechende zylindrische Aufnahme oder dergleichen aufweist, verbunden. Die Kupplungseinrichtung ihrerseits ist häufig über einen Außenlamellenträger mittels eines Lagers auf einem positionsfesten Anordnungsbauteil, beispielsweise dem Getriebedeckel oder Ähnlichem, einerseits abgestützt bzw. kraftschlüssig verbunden, andererseits beispielsweise über ein mit dem Außenlamellenträger fest verbundenes Stützblech und ein weiteres Lager an der positionsfest mit dem Getriebeboden verbundenen Einrückeinrichtung. Diese Art der Lagerung respektive Kopplung der beteiligten Komponenten führt einerseits dazu, dass die Einrückeinrichtung und die Kupplungsanordnung getrennt voneinander montiert werden müssen, nämlich zunächst die Einrückeinrichtung und anschließend die Kupplungseinrichtung. Darüber hinaus sind sie an unterschiedlichen Anordnungsbauteilten gelagert respektive abgestützt und befestigt. Etwaige Fluchtungsfehler oder Toleranzen der entsprechenden Achsen, bezüglich welcher die Kupplungseinrichtung und die Einrückeinrichtung zentriert respektive ausgerichtet sind, wirken sich nachteilig auf das Gesamtsystem aus.

Der Erfindung liegt damit das Problem zugrunde, einer demgegenüber verbesserte Kupplungsanordnung anzugeben.

Die Aufgabe wird durch eine Kupplungseinrichtung mit den Merkmalen des Patentanspruchs 1 gelöst.

Zur Lösung dieses Problems ist erfindungsgemäß vorgesehen, dass die axial abgestützte Einrückeinrichtung über ein weiteres Lager ausschließlich an einem mit dem ersten Bauteil verbundenen weiteren Bauteil der Kupplungseinrichtung radial zentriert ist.

Die Erfindung sieht vor, die Einrückeinrichtung ausschließlich an der Kupplungseinrichtung radial zu zentrieren, also kupplungseinrichtungsseitig zu integrieren. Die Einrückeinrichtung ist lediglich axial abgestützt, beispielsweise am Getriebegehäuse respektive dem Getriebeboden. Eine radiale Zentrierung oder Führung findet hier nicht statt. Diese radiale Zentrierung erfolgt ausschließlich an einem weiteren Bauteil der Kupplungseinrichtung, das fest mit dem ersten Bauteil verbunden ist, über das die Kupplungseinrichtung ihrerseits am anderen Ende radial am positionsfesten Anordnungsbauteil, wie beispielsweise dem Getriebegehäusedeckel gelagert und zentriert ist. Das heißt, dass die Einrückeinrichtung und die Kupplungseinrichtung an ein und derselben Achse zentriert sind. Dies bietet eine Reihe von Vorteilen.

Zum einen sind keine Zentrierfehler, resultierend aus unterschiedlichen Lagerachsen, gegeben, da die Ausrichtung und Zentrierung der Einrückeinrichtung kupplungsintern erfolgt und nicht über das Getriebegehäuse, so dass die Einrücklagerachse optimal zur Deckellagerachse der Kupplungseinrichtung ausgerichtet ist respektive mit ihr zusammenfällt. Auch sind etwaige Schraubverbindungen zwischen Einrückeinrichtung und Getriebegehäuse respektive Getriebeboden nicht mehr erforderlich, da die Einrückeinrichtung dortseits lediglich axial abgestützt ist. Darüber hinaus sind die beiden Einrichtungen auch nicht mehr separat und getrennt nacheinander zu montieren. Vielmehr kann die Einrückeinrichtung bereits an der Kupplungseinrichtung vormontiert werden und sodann das gesamte System getriebegehäuseseitig verbaut werden.

In einer erfindungsgemäßen Weiterbildung der Erfindung ist das erste Bauteil ein Außenlamellenträger oder ein Innenlamellenträger und das zweite Bauteil ein mit diesem verbundenes Stützblech. Die Kupplungseinrichtung ist also an einer Seite am Getriebedeckel über den Außenlamellenträger und ein dortiges Radiallager respektive Radial-Axial-Lager abgestützt und drehgelagert. Je nach Bauart der Kupplungseinrichtung kann diese Lagerung auch über den Innenlamellenträger erfolgen. Die Lagerung an der anderen Kupplungseinrichtungsseite erfolgt über ein ringförmiges Stützblech, das fest mit dem Außenlamellenträger oder Innenlamellenträger verbunden ist und das über das weitere Lager auf der Einrückeinrichtung abgestützt respektive drehgelagert ist.

Das erste Lager selbst ist ein axial unbewegliches Festlager, das heißt, dass die Kupplungseinrichtung zum Getriebedeckel über ein Festlager abgestützt und gelagert ist. Das zweite Lager, über das die Kupplungseinrichtung an der Einrückeinrichtung abgestützt ist respektive über das die Einrückeinrichtung an der Kupplungseinrichtung zentriert ist, ist hingegen zweckmäßigerweise ein axial bewegliches Loslager. Das heißt, dass die Kupplungseinrichtung an zwei Lagerstellen gelagert ist, von denen die eine ein reines Festlager und die andere ein reines Loslager ist. Umwuchtkräfte können hierüber auf zwei Lagerstellen abgestützt werden. Die Lagerung ist aufgrund einer eindeutigen Fest-Los-Lagerung nicht überbestimmt. Die Loslagerung ist insbesondere auch dahingehend zweckmäßig, als es bei einer Betätigung der Kupplungseinrichtung mitunter zu einer minimalen Axialbewegung der Kupplungseinrichtung, die wie beschrieben auf dem Getriebedeckel abgestützt ist, kommen kann, da aufgrund der gegebenen Axialkraft der Getriebedeckel minimal ausweichen kann. Eine solche Bewegung kann aufgrund der Loslagerung des Stützblechs ohne weiteres kompensiert werden.

Zum einfachen Zentrieren respektive Koppeln von Einrückeinrichtung und Kupplungseinrichtung über das weitere Lager weist die Einrückeinrichtung zweckmäßigerweise einen radialen Lagersitz auf, an dem das die Einrückeinrichtung außen umgebende Lager aufsitzt. Dieser Lagersitz ist bevorzugt so ausgelegt, dass er die Loslagerung ermöglicht, mithin also die axiale Beweglichkeit des weiteren Lagers zulässt.

Wie beschrieben ist die Einrückeinrichtung am Getriebegehäuse respektive dem Getriebeboden ausschließlich axial abgestützt. Um eine feste, permanente Abstützung zu realisieren, sieht eine zweckmäßige Weiterbildung der Erfindung vor, dass die Einrückeinrichtung über wenigstens ein kupplungseinrichtungsseitig vorgesehenes Federelement axial gegen ein Widerlager, also das Getriebegehäuse bzw. den Getriebeboden, gespannt ist. Ein solches Federelement, beispielsweise eine Tellerfeder, gegen die ein über die Einrückeinrichtung axial bewegbares ringförmiges Betätigungselement, beispielsweise der bereits beschriebene Drucktopf, bewegbar ist, ist seitens der Kupplungseinrichtung ohnehin vorgesehen und wird nun zusätzlich zum Bereitstellen der Rückstellkraft beim Bewegen des Betätigungselements dazu genutzt, die Einrückeinrichtung axial gegen den Getriebeboden zu spannen. Die Kopplung zwischen der Einrückeinrichtung und dem Federelement, also beispielsweise der Tellerfeder erfolgt über das Betätigungselement, das in bekannter Weise über Lager drehbar an der Einrückeinrichtung gelagert respektive mit dem Ringkolben gekoppelt ist. Da das Federelement, das auch als Lüftfeder bezeichnet werden kann, zwischen dem Getriebedeckel und der Einrückeinrichtung vorgesehen und vorgespannt ist, ist auch eine Abstützung am Getriebedeckel gegeben. Die Einrückeinrichtung wird folglich im unbetätigten Zustand der Kupplung durch die Federkraft des Federelements, also der Lüftfeder und im betätigten Zustand der Kupplung resultierend aus der Betätigungskraft axial verspannt.

Wie bereits beschrieben sind Kupplungsanordnungen in verschiedenen Bauformen bekannt. Neben einer Einfachkupplung kann die erfindungsgemäße Kupplungsanordnung auch zwei radial ineinander liegende oder axial hintereinander angeordnete Kupplungseinrichtungen umfassen, die jeweils einen Außenlamellenträger und einen Innenlamellenträger aufweisen, die separat über die Einrückeinrichtung betätigbar sind. Jede Kupplungseinrichtung weist also ein Lamellenpaket umfassend Außen- und Innenlamellen, die am jeweiligen Außenlamellenträger und am Innenlamellenträger angeordnet sind, sowie ein separates Betätigungselement auf. Jedes Betätigungselement z. B. bei radialer Anordnung kann über einen separaten Ringkolben seitens der gemeinsamen Einrückeinrichtung betätigt werden, wobei hierzu zwangsläufig jeder Ringkolben separat über die Einrückeinrichtung hydraulisch bewegt werden kann. Die Abstützung dieser beiden Kupplungseinrichtungen erfolgt lediglich beispielsweise über den Außenlamellenträger der radial außenliegenden Kupplungseinrichtung, der über einen Verbindungssteg mit dem radial innenliegenden Außenlamellenträger der zweiten Kupplungseinrichtung gekoppelt ist. Es ist also auch bei dieser Doppelkupplung nur eine getriebedeckelseitige Lagerebene über ein Festlager gegeben. Auch die Abstützung an der anderen Seite erfolgt lediglich über das mit dem Außenlamellenträger verbundene Stützblech zur Einrückeinrichtung hin. Die zweite Kupplungsanordnung, radial weiter innenliegend, nimmt also an der Lagerung und Zentrierung des gesamten Kupplungssystems nicht teil. Wie beschrieben ist aber auch eine axiale Anordnung möglich.

Erfindungsgemäß ist vorgesehen, dass die hydraulisch betätigbare Einrückeinrichtung wenigstens eine axial begrenzte Sackbohrung, über die ein Hydraulikfluid zuführbar ist, aufweist, das über einen mit der Sackbohrung kommunizierenden Fluidkanal in einen Ringkanal führbar ist, der über ein axial bewegliches ringförmiges Stellelement begrenzt ist, wobei die vom Hydraulikfluid beaufschlagte Axialfläche der Sackbohrung kleiner als die beaufschlagbare Fläche des ringförmigen Stellelements ist. Die Einrückeinrichtung weist, wie beschrieben, einen axial bewegliches ringförmiges Stellelement, also einen Ringkolben auf, der mit dem Betätigungselement, beispielsweise dem Drucktopf, gekoppelt ist. Um den Ringkolben zu bewegen, muss Hydraulikfluid zugeführt werden. Hierzu ist an der Einrückeinrichtung mindestens eine axial begrenzte Sackbohrung, an die die entsprechende Zuführleitung angeschlossen wird, vorgesehen. Von dieser Sackbohrung aus gelangt das Hydraulikfluid über einen entsprechenden Fluidkanal in einen Ringkanal, der vom Ringkolben begrenzt ist. Erfindungsgemäß ist nun vorgesehen, dass die vom Hydraulikfluid beaufschlagte Axialfläche der Sackbohrung kleiner als die beaufschlagte Fläche des Ringkolbens ist. Eine solche Anordnung mit Sackbohrung und Ringkanal und Ringkolben ist, wenn zwei Kupplungseinrichtungen vorgesehen sind, für jede Kupplungseinrichtung vorgesehen. Im unbetätigten Zustand wird, wie beschrieben, die Einrückeinrichtung durch die Vorspannung über das Federelement, beispielsweise die Tellerfeder, gegen das Gehäuse verspannt. Bei einer Betätigung, wenn also die Kupplungseinrichtung oder eine der Kupplungseinrichtungen aktiv betätigt wird, stützt sich die Einrückeinrichtung aufgrund des Kraftflusses axial am Gehäuse ab, wobei die axiale Abstützkraft aus der Reaktionskraft der Betätigungskraft gebildet wird, das heißt, dass diese Kraftkomponente die notwendige Axialkraft erzeugen. Die durch das Hydraulikfluid in axialer Richtung auf die Einrückeinrichtung einwirkende Kraft, die auf die Axialfläche der Sackbohrung wirkt, wirkt diesen anderen Kräften zwar entgegen, ist aber in allen Betriebszuständen deutlich kleiner als diese. Dies resultiert insbesondere aus den erfindungsgemäß vorgesehenen Flächenverhältnissen, also dem Umstand, dass die sackbohrungsseitige Axialfläche deutlich kleiner ist als die ringkolbenseitige Axialfläche. Das heißt, dass die Kraft an der Hydraulikfluidübergabe deutlich kleiner ist, was dazu führt, dass auch die entsprechende Axialkraft deutlich kleiner ist, resultierend aus dem Zusammenhang Kraft = Druck x Fläche. Somit ist sichergestellt, dass die Einrückeinrichtung sowohl im unbetätigten als auch insbesondere im betätigten Zustand stets axial fest kraft- und formschlüssig in ihrer Position gehalten ist.

Die Kupplungsanordnung selbst kann schließlich eine nasse Kupplung, insbesondere eine nasse Doppelkupplung sein.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine Prinzipdarstellung einer erfindungsgemäßen Kupplungsanordnung in Form einer Doppelkupplung, in einer geschnittenen Teilansicht,
- Figur 2: die Kupplungsanordnung aus Figur 1 mit zusätzlichen Darstellungen der mit dem Hydraulikfluid beaufschlagten Axialflächen an der Einrückeinrichtung, und
- Figur 3: die Kupplungsanordnung aus Figur 1 mit dem eingezeichneten Kraftfluss bei Betätigung einer der Kupplungseinrichtungen.

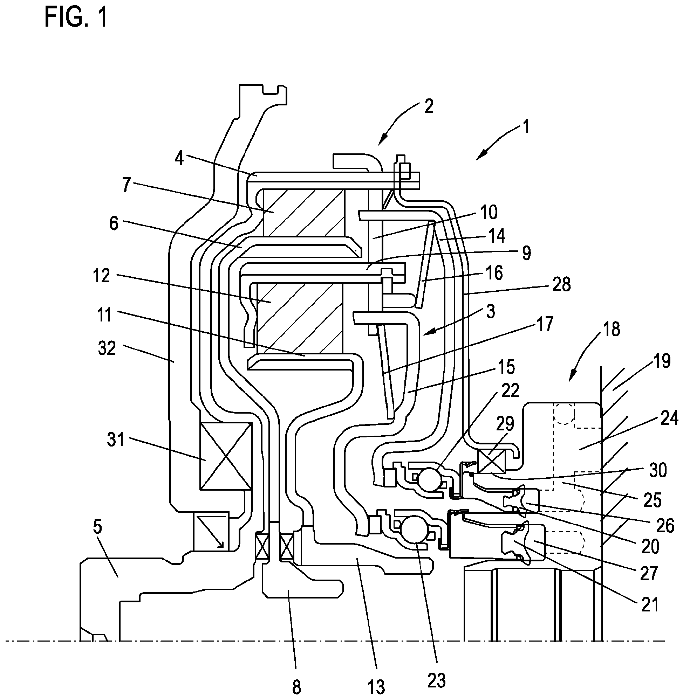

Figur 1 zeigt eine erfindungsgemäße Kupplungsanordnung 1, umfassend eine erste Kupplungseinrichtung 2 und eine zweite Kupplungseinrichtung 3, die jeweils als Lamellenkupplungen ausgeführt sind. Die erste Kupplungseinrichtung 2 umfasst einen Außenlamellenträger 4, an dem nicht näher gezeigte Außenlamellen axial beweglich angeordnet sind. Der Außenlamellenträger 4 ist über einen Koppelabschnitt 5 mit einem Antriebsglied, beispielsweise einer Antriebswelle eines Brennkraftmotors, verbunden, kann also aktiv gedreht werden.

Vorgesehen ist ferner ein Innenlamellenträger 6 mit einer Mehrzahl axial beweglich daran angeordneten Innenlamellen, ebenfalls nicht näher gezeigt, die zwischen die Außenlamellen des Außenlamellenträgers 4 greifen. Es ist also ein Lamellenpaket 7 gegeben, das axial zusammengedrückt werden kann, um Drehmoment zu übertragen. Der Innenlamellenträger 6 ist über einen Koppelabschnitt 8, der eine Nabe bildet, mit einer Getriebeeingangswelle verbunden, an die das zu übertragende Drehmoment abgegeben wird.

Die Kupplungseinrichtung 3 umfasst ebenfalls einen Außenlamellenträger 9 mit einer Mehrzahl an nicht nähergezeigten Außenlamellen. Der Außenlamellenträger 9 ist über einen Verbindungssteg 10 ein Drehmoment übertragend mit dem Außenlamellenträger 4 verbunden, das heißt, dass bei Antrieb des Außenlamellenträgers 4 zwangsläufig auch der Außenlamellenträger 9 rotiert.

An einem Innenlamellenträger 11 der zweiten Kupplungseinrichtung 3 sind eine Mehrzahl an Innenlamellen angeordnet, die wiederum zwischen die Außenlamellen des Außenlamellenträgers 9 greifen. Auch hier ist also ein Lamellenpaket 12 gebildet. Der Innenlamellenträger 11 ist über einen Koppelabschnitt 13 mit einer zweiten Hohlwelle, die zum Getriebe läuft, verbunden.

Die Betätigung der Kupplungseinrichtung 2 oder der Kupplungseinrichtung 3 erfolgt über entsprechende Betätigungselemente 14 zum Betätigen der Kupplungseinrichtung 2 bzw. 15 zum Betätigen der Kupplungseinrichtung 3. Bei diesen Betätigungselementen 14, 15 handelt es sich exemplarisch um entsprechende Drucktöpfe, die axial bewegt werden können, und über die das jeweilige Lamellenpaket 7 bzw. 12 für einen Kraftschluss zusammengedrückt werden kann. Jedes Betätigungselement 14, 15 ist über ein Federelement in Form einer Tellerfeder 16, 17 vorgespannt respektive gegen diese Tellerfeder 16, 17 axial bewegbar.

Zur Erwirkung dieser Axialbewegung und damit zum Betätigen der einen oder anderen Kupplungseinrichtung 2, 3 ist eine Einrückeinrichtung 18 vorgesehen, die ringförmig ausgeführt ist und die ausschließlich axial an einem positionsfesten Getriebegehäuseabschnitt, beispielsweise dem Getriebeboden 19, abgestützt respektive aufgelagert ist. Sie weist zwei als Ringkolben ausgeführte Stellelemente 20, 21 auf, die in Ringnuten axial beweglich aufgenommen sind. Über entsprechende Lager 22, 23 sind die Stellelemente 20, 21 mit den Betätigungselementen 14, 15 gekoppelt, wobei die Betätigungselemente 14, 15 über die Lager 22, 23 relativ zu den natürlich positionsfesten Stellelementen 20, 21 drehbar sind.

Zur axialen Bewegung des einen oder anderen Stellelements 20 sind an der Einrückeinrichtung 18 entsprechende Sackbohrungen 24, über die ein Hydraulikfluid zugeführt werden kann, vorgesehen, von denen hier nur eine nur gestrichelt gezeigt ist. Jede Sackbohrung 24, von denen hier nur eine gezeigt ist, die zum Stellelement 20 führt, ist über einen Fluidkanal 25 mit einem Ringkanal 26, in dem der Ringkolben, also das Stellelement 20 angeordnet ist, verbunden. Das Stellelement 21 ist ebenfalls in einem entsprechenden Ringkanal 26 aufgenommen. Wird nun Hydraulikfluid in den einen oder anderen Ringkanal 26, 27 gedrückt, so kommt es zu einer axialen Verschiebung des entsprechenden Stellelements 20, 21 und damit zu einer Axialbewegung des jeweiligen Betätigungselements 14, 15 gegen die jeweilige Tellerfeder 16, 17, resultierend in einem Zusammendrücken des jeweiligen Lamellenpakets 7, 12. Wie beschrieben ist die Einrückeinrichtung 18 lediglich axial am Getriebeboden 19 abgestützt. Die radiale Zentrierung erfolgt ausschließlich an der Kupplungseinrichtung 2. Diese weist hierzu ein Stützblech 28 auf, das fest mit dem Außenlamellenträger 4 verbunden ist. Dieses Stützblech 28 verläuft radial und erstreckt sich zur Einrückeinrichtung 18 hin. Dort ist es über ein Lager 29, ein reines Radiallager, abgestützt. An der Einrückeinrichtung 18 ist ein entsprechender Lagersitz 30 vorgesehen, der eine gewisse Axialbeweglichkeit des Lagers 29 zulässt, das heißt, dass dieses als Loslager ausgeführt ist. Die Einrückeinrichtung 18 ist also radial ausschließlich an dem Stützblech 28 respektive der ersten Kupplungseinrichtung 2 zentriert.

An der anderen Seite ist die Kupplungseinrichtung 2 über den Außenlamellenträger 4 mittels eines Lagers 31, das als reines Festlager ausgeführt ist, an einem positionsfesten Anordnungsbauteil, hier dem Getriebedeckel 32, sowohl radial als auch axial abgestützt. Die Kupplungseinrichtung 2 - und aufgrund ihrer Kopplung auch die Kupplungseinrichtung 3 - sind demzufolge an einer gehäusedeckelseitigen Achse zentriert. An eben dieser gehäusedeckelseitigen Achse ist aber auch die Einrückeinrichtung 18 zentriert, da sie im Stützblech 28 zentriert ist, das seinerseits wiederum fest mit dem Außenlamellenträger 4 verbunden ist, der wiederum die Lagerung und Zentrierung über das Lager 31 am Getriebedeckel 32 erwirkt. Aufgrund der lediglich axialen Abstützung zum Getriebeboden 19 hin ist folglich die Einrückeinrichtung 18 an derselben Lagerachse zentriert, wie auch die Kupplungseinrichtung 2.

Dies ermöglicht es, die Einrückeinrichtung 18 quasi kupplungseinrichtungsseitig zu integrieren und insbesondere vorzumontieren, das heißt, dass die komplette Baugruppe umfassend die beiden Kupplungseinrichtung 2, 3 sowie die Einrückeinrichtung 18 vormontiert wird und als vormontierte Baugruppe getriebegehäuseseitig, also in die Getriebeglocke eingesetzt wird. Zusätzliche Befestigungsmittel wie Verschraubungen oder Ähnliches zum Befestigen der Einrückeinrichtung 18 am Getriebeboden 19 sind nicht erforderlich.

Die axiale Abstützung der Einrückeinrichtung 18 erfolgt im unbetätigten Zustand der Kupplungseinrichtungen 2, 3 über die Vorspannung, die seitens der Federelemente 16, 17, also der Tellerfedern gegeben ist. Denn diese spannen die Einrückeinrichtung 18 über die Betätigungselemente 14, 15, und die Lager 22, 23 axial im unbetätigten Zustand gegen den Getriebeboden 19.

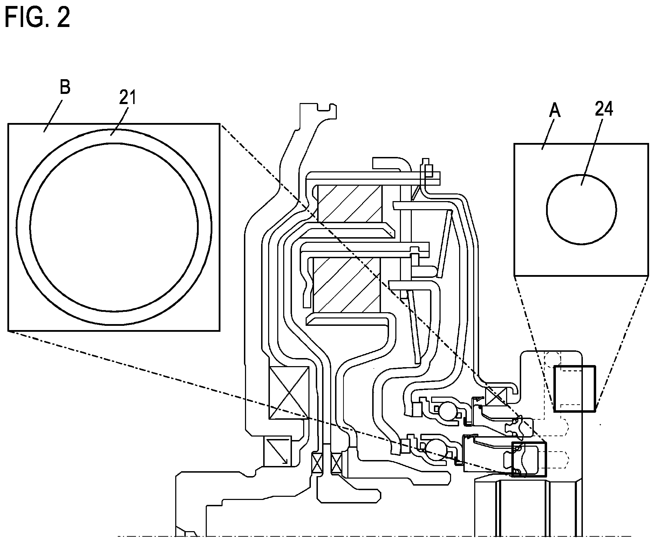

Wird jedoch eine der Kupplungseinrichtungen 2, 3 betätigt, wird also Hydraulikfluid über eine der Sackbohrungen zugeführt, so ist natürlich sicherzustellen, dass aufgrund der hierüber eingetragenen, auf die Einrückeinrichtung 18 wirkende Axialkraft die Einrückeinrichtung 18 nicht aus ihrer axial fixen Position bewegt wird. Um dies sicherzustellen, sind die axial belasteten Flächen im Bereich der jeweiligen Sackbohrung 24 und des jeweiligen Stellelements 20, 21 so bemessen, dass die vom Hydraulikfluid beaufschlagte Axialfläche im Bereich der jeweiligen Sackbohrung 24 deutlich kleiner als die beaufschlagte Axialfläche am jeweiligen ringförmigen Stellelement 20, 21 ist. Figur 2 zeigt dies exemplarisch. Im vergrößerten Abschnitt A ist eine beispielhafte Darstellung der Axialfläche der einzigen hier gezeigten Sackbohrung 24 gezeigt. Im vergrößerten Abschnitt B ist die ringförmige Axialfläche, hier beispielsweise des Stellelements 21, also des Ringkolbens, gezeigt. Ersichtlich ist die gesamte Kreisringfläche des Stellelements 21 deutlich größer als die Axialfläche der Sackbohrung 24.

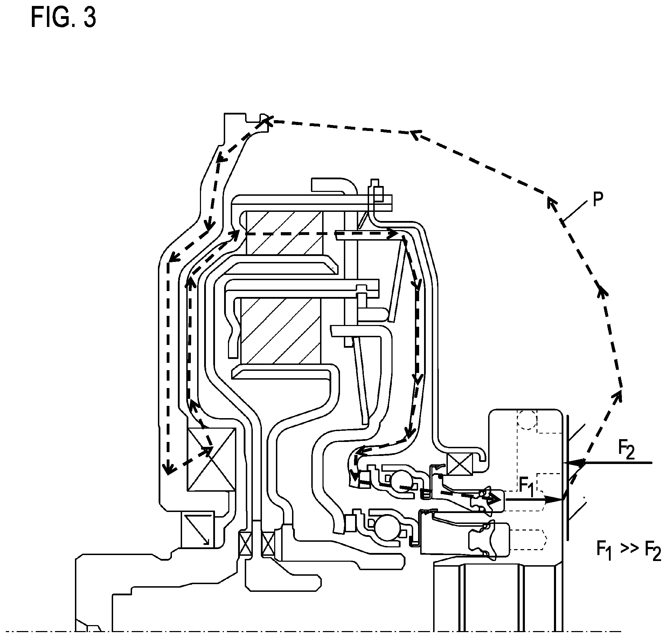

Dies führ dazu, dass sich beim Betätigen einer der Kupplungseinrichtungen eine der aus dem Zuführen der Hydraulikfluid zur Einrückeinrichtung 18 ergebenden Axialkraft F₂ entgegengesetzt wirkende Kraft F₁ einstellt, die deutlich größer ist als die Kraft F₂. Dies ist exemplarisch in Figur 3 dargestellt, wo dem Prinzip nach der Kraftfluss über die entsprechenden Kraftflusspfeile P dargestellt ist. Bei einer Betätigung stützt sich die Einrückeinrichtung 18 aufgrund des Kraftflusses am Getriebeboden 19 ab, wobei die Kräfte der Federelemente 16, 17, also der Tellerfedern, und die Reaktionskraft der Betätigungskraft die notwendige Axialkraft F₁ erzeugen. Die durch das Drucköl in axialer Richtung auf die Einrückeinrichtung 18 einwirkende Kraft F₂ wirkt den anderen Kräften respektive der Axialkraft F₁ entgegen. Sie ist aber in allen Betriebszuständen stets deutlich kleiner als diese, das heißt, F₂>>F₁. Die auf die Fläche wirkende Kraft ergibt sich durch den Zusammenhang Kraft = Druck x Fläche. Dadurch, dass die Fläche an der Hydraulikfluidübergabe deutlich kleiner ist als am jeweiligen Stellelement 20, 21, ist auch die entsprechende Kraft deutlich kleiner. Damit ist sichergestellt, dass auch bei einer Betätigung einer der Kupplungseinrichtungen 2, 3 die Einrückeinrichtung 18 fest gegen den Getriebeboden 19 gespannt und an diesem axial abgestützt ist.

Bei einer Betätigung einer der Kupplungseinrichtungen 2, 3 kann nicht gänzlich ausgeschlossen werden, dass es zu einer extrem geringen axialen Ausweichbewegung z. B. des positionsfesten Anordnungsbauteils, also des Getriebedeckels 32 und damit zu einer geringfügen Axialbewegung der Kupplungseinrichtung 2, 3 kommen kann. Um diese zu kompensieren ist, wie ausgeführt, das Lager 29 als Loslager ausgeführt. Dies wird durch entsprechende Auslegung des Lagersitzes 30, der diese Axialbewegung erlaubt, ermöglicht.

### Bezugszeichenliste

- 1: Kupplungsanordnung
- 2: Kupplungseinrichtung
- 3: Kupplungseinrichtung
- 4: Außenlamellenträger
- 5: Koppelabschnitt
- 6: Innenlamellenträger
- 7: Lamellenpaket
- 8: Koppelabschnitt
- 9: Außenlamellenträger
- 10: Verbindungssteg
- 11: Innenlamellenträger
- 12: Lamellenpaket
- 13: Koppelabschnitt
- 14: Betätigungselement
- 15: Betätigungselement
- 16: Tellerfeder
- 17: Tellerfeder
- 18: Einrückeinrichtung
- 19: Getriebeboden
- 20: Stellelement
- 21: Stellelement
- 22: Lager
- 23: Lager
- 24: Sackbohrung
- 25: Fluidkanal
- 26: Ringkanal
- 27: Ringkanal
- 28: Stützblech
- 29: Lager
- 30: Lagersitz
- 31: Lager
- 32: Getriebedeckel

## Patentansprüche

1. Kupplungsanordnung, umfassend wenigstens eine Kupplungseinrichtung (2, 3) sowie eine dieser nachgeschaltete Einrückeinrichtung (18) zum Betätigen der Kupplungseinrichtung (2, 3), wobei die Kupplungseinrichtung (2, 3) mit einem Bauteil (4) über ein Lager (31) an einem positionsfesten Anordnungsbauteil (32) radial zentriert ist, die axial abgestützte Einrückeinrichtung (18) über ein weiteres Lager (29) ausschließlich an einem mit dem ersten Bauteil (4) verbundenen weiteren Bauteil (28) der Kupplungseinrichtung (2) radial zentriert ist, **dadurch gekennzeichnet, dass** das erste Bauteil ein Außenlamellenträger (4) oder ein Innenlamellenträger und das zweite Bauteil ein mit diesem verbundenes Stützblech (28) ist, **dadurch gekennzeichnet, dass** die hydraulisch betätigbare Einrückeinrichtung (18) wenigstens eine axial begrenzte Sackbohrung (24), über die ein Hydraulikfluid zuführbar ist, aufweist, das über einen mit der Sackbohrung (24) kommunizierenden Fluidkanal (25) in einen Ringkanal (26, 27) führbar ist, der über ein axial bewegliches ringförmiges Stellelement (20, 21) begrenzt ist, wobei die vom Hydraulikfluid beaufschlagte Axialfläche der Sackbohrung (24) kleiner als die beaufschlagte Fläche des ringförmigen Stellelements (20, 21) ist.

2. Kupplungsanordnung nach Anspruch 1, **dadurch gekennzeichnet, dass** das erste Lager (31) ein axial unbewegliches Festlager und das zweite Lager (29) ein axial bewegliches Loslager ist.

3. Kupplungsanordnung nach einem der vorangehenden Ansprüche, **dadurch gekennzeichnet, dass** an der Einrückeinrichtung (18) ein radialer Lagersitz (30), auf dem das die Einrückeinrichtung (18) außen umgebende Lager (29) sitzt.

4. Kupplungsanordnung nach einem der vorangehenden Ansprüche, **dadurch gekennzeichnet, dass** die Einrückeinrichtung (18) über wenigstens ein kupplungseinrichtungsseitig vorgesehenes Federelement (16, 17) axial gegen ein Widerlager (19) gespannt ist.

5. Kupplungsanordnung nach einem der vorangehenden Ansprüche, **dadurch gekennzeichnet, dass** das Federelement (16, 17) eine Tellerfeder ist, gegen die ein über die Einrückeinrichtung (18) axial bewegbares ringförmiges Betätigungselement (14, 15) bewegbar ist.

6. Kupplungsanordnung nach einem der vorangehenden Ansprüche, **dadurch gekennzeichnet, dass** zwei radial ineinander liegende oder axial hintereinander angeordnete Kupplungseinrichtungen (2, 3) umfassend jeweils einen Außenlamellenträger (4, 9) und einen Innenlamellenträger (6, 11) vorgesehen sind, die separat über die Einrückeinrichtung (18) betätigbar sind.

7. Kupplungsanordnung nach einem der vorangehenden Ansprüche, **dadurch gekennzeichnet, dass** es eine nasse Kupplung, insbesondere eine nasse Doppelkupplung ist.

## Claims

1. A clutch assembly, comprising at least one clutch device (2, 3) and an engagement device (18), mounted downstream of said clutch device, for actuating the clutch device (2, 3), wherein the clutch device (2, 3) is radially centred on a stationary assembly part (32) by means of a component (4) and via a bearing (31), wherein the axially supported engagement device (18) is radially centred via an additional bearing (29) only on an additional component (28) of the clutch device (2) that is connected to the first component (4), **characterised in that** the first component is an outer plate carrier (4) or an inner plate carrier and the second component is a support sheet (28) connected thereto, **characterised in that** the hydraulically actuatable engagement device (18) has at least one axially limited blind hole (24) via which a hydraulic fluid can be supplied, which can be guided via a fluid channel (25) communicating with the blind hole (24) into an annular channel (26, 27) delimited by an axially movable annular adjusting element (20, 21), wherein the axial surface of the blind hole (24) acted upon by the hydraulic fluid is smaller than the surface of the annular adjusting element (20, 21) acted upon.

2. The clutch assembly according to claim 1, **characterised in that** the first bearing (31) is an axially immovable fixed bearing and the second bearing (29) is an axially movable floating bearing.

3. The clutch assembly according any one of the preceding claims, **characterised in that** there is a radial bearing seat (30) on the engagement device (18) on which the bearing (29) surrounding the engagement device (18) on the outside is seated.

4. The clutch assembly according to any one of the preceding claims, **characterised in that** the engagement device (18) is tensioned axially against an abutment (19) via at least one spring element (16, 17) provided on the clutch device side.

5. The clutch assembly according to any one of the preceding claims, **characterised in that** the spring element (16, 17) is a disc spring against which an annular actuating element (14, 15), which can be moved axially via the engagement device (18), can be moved.

6. The clutch assembly according to any one of the preceding claims, **characterised in that** two clutch devices (2, 3) lying radially one inside the other or arranged axially one behind the other are provided, each comprising an outer plate carrier (4, 9) and an inner plate carrier (6, 11), which can be actuated separately via the engagement device (18).

7. The clutch assembly according to any one of the preceding claims, **characterised in that** it is a wet clutch, in particular a wet double clutch.

## Revendications

1. Dispositif d'accouplement comprenant au moins un dispositif d'accouplement (2, 3) et un dispositif d'engagement (18) monté en aval de ce dernier pour actionner le dispositif d'accouplement (2, 3), le dispositif d'accouplement (2, 3) étant centré radialement sur un élément d'agencement (32) à position fixe par l'intermédiaire d'un palier (31) au moyen d'un élément (4), le dispositif d'engagement (18) supporté axialement est centré radialement par un autre palier (29) exclusivement sur un autre élément (28) du dispositif d'accouplement (2) relié au premier élément (4), **caractérisé en ce que** le premier élément est un support de disque extérieur (4) ou un support de disque intérieur et le second élément est une plaque de support (28) reliée à celui-ci, **caractérisé en ce que** le dispositif d'engagement (18) actionnable hydrauliquement comporte au moins un trou borgne (24) limité axialement par lequel peut être introduit un fluide hydraulique qui peut être guidé par un canal de fluide (25) en communication avec le trou borgne (24) dans un canal circulaire (26, 27) qui est limité par un élément de réglage (20, 21) annulaire mobile axialement, la surface axiale du trou borgne (24) sollicitée par le fluide hydraulique étant plus petite que la surface sollicitée de l'élément de réglage (20, 21) annulaire.

2. Dispositif d'accouplement selon la revendication 1, **caractérisé en ce que** le premier palier (31) est un palier fixe immobile axialement et le second palier (29) est un palier libre mobile axialement.

3. Dispositif d'accouplement selon l'une quelconque des revendications précédentes, **caractérisé en ce que** le dispositif d'engagement (18) comporte un siège de palier (30) radial sur lequel repose le palier (29) entourant le dispositif d'engagement (18) à l'extérieur.

4. Dispositif d'accouplement selon l'une quelconque des revendications précédentes, **caractérisé en ce que** le dispositif d'engagement (18) est serré axialement contre un palier de butée (19) par au moins un élément ressort (16, 17) disposé du côté du dispositif d'accouplement.

5. Dispositif d'accouplement selon l'une quelconque des revendications précédentes, **caractérisé en ce que** l'élément ressort (16, 17) est une rondelle-ressort contre laquelle un élément d'actionnement annulaire (14, 15) mobile axialement peut être déplacé par l'intermédiaire du dispositif d'engagement (18).

6. Dispositif d'accouplement selon l'une quelconque des revendications précédentes, **caractérisé en ce que** deux dispositifs d'accouplement (2, 3) disposés radialement l'un à l'intérieur de l'autre ou disposés axialement l'un derrière l'autre sont prévus, comprenant chacun un support de disque extérieur (4, 9) et un support de disque intérieur (6, 11), qui peuvent être actionnés séparément par le dispositif d'engagement (18).

7. Dispositif d'accouplement selon l'une quelconque des revendications précédentes, **caractérisé en ce qu'**il s'agit d'un accouplement humide, en particulier d'un double accouplement humide.
